# EUROPÄISCHE PATENTSCHRIFT

(11) **EP 3 895 503 B1**
(45) Veröffentlichungstag und Bekanntmachung des Hinweises auf die Patenterteilung: **08.10.2025**
(21) Anmeldenummer: 19829066.0
(22) Anmeldetag: 13.12.2019
(51) Int. Cl.: H05B 6/62

(54) **PEF-GARGERÄT UND PEF-SYSTEM**
PEF COOKING APPLIANCE AND PEF SYSTEM
APPAREIL DE CUISSON PEF ET SYSTÈME PEF

(30) Priorität: 14.12.2018 DE 102018221814
(43) Veröffentlichungstag der Anmeldung: 20.10.2021
(73) Patentinhaber: BSH Hausgeräte GmbH, 81739 München (DE)
(72) Erfinder: BECKE, Christoph, 83109 Grosskarolinenfeld (DE); HAFER, Christian, 85435 Erding (DE); HAS, Uwe, 84579 Unterneukirchen (DE); HEIKEL, Barbara, 83278 Traunstein (DE); HIMMEL, Arnulf, 83301 Traunreut (DE); KOCH, Bernhard, 83334 Inzell (DE); MICHL, Florian, 83308 Trostberg (DE); STEINBACHER, Manfred, 83334 Inzell (DE); WREHDE, Edith, 83365 Nußdorf (DE); ZIEGLER, Felicitas, 83371 Stein a.d. Traun (DE)
(86) Internationale Anmeldenummer: PCT/EP2019/085202
(87) Internationale Veröffentlichungsnummer: WO 2020/120784

(56) Entgegenhaltungen:
- WO-A1-2011/139144
- WO-A1-2012/125021
- WO-A1-2015/005793
- WO-A1-2016/008868
- DE-T5- 112014 001 599
- US-A- 4 333 521

## Beschreibung

Die Erfindung betrifft ein PEF-Gargerät, aufweisend einen PEF-Generator und mindestens einen Träger zur Aufnahme mindestens eines Aufbewahrungsbehälters für Lebensmittel. Die Erfindung betrifft auch ein PEF-System mit einem PEF-Gargerät und mindestens einem darin entnehmbar eingesetzten Aufbewahrungsbehälter. Die Erfindung ist insbesondere vorteilhaft anwendbar auf Haushaltsgeräte zur Behandlung von Lebensmitteln.

Eine bislang kommerziell in der Lebensmittelindustrie angewandte Methode zur Energiezufuhr in Lebensmittel beruht auf der Erzeugung gepulster elektrischer Gleichfelder ("Pulsed Electric Fields"; PEF) am Ort der Lebensmittel. Hierbei werden Lebensmittel alternierenden elektrischen Feldern mit einer Pulsdauer von z.B. bis zu einigen 10 Mikrosekunden ausgesetzt. Diese alternierenden Felder bewirken durch die Lebensmittel fließende alternierende Stromstöße, welche eine ohmsche Verlustleistung in die Lebensmittel einbringen und dadurch eine ohmsche Erwärmung der Lebensmittel bewirken. Auch werden in den Lebensmitteln kapazitive Verschiebeströme erzeugt, die sehr große Werte annehmen können. Diese Verschiebeströme bewirken eine gewisse Entkeimung der Lebensmittel und erinnern in ihrer Wirkung auf das Lebensmittel an den Vorgang des Pasteurisierens.

Bei nichtflüssigen bzw. stückigen Lebensmitteln werden die Zwischenräume zwischen ihnen mit Wasser aufgefüllt. Dem Wasser wird hierbei so viel Salz zugesetzt, dass die elektrische Leitfähigkeit des Wassers der elektrischen Leitfähigkeit des Lebensmittels zumindest ungefähr entspricht.

WO 2011/139144 A1 offenbart ein Verfahren und ein System zum Behandeln eines im Wesentlichen festen Nahrungsmittelprodukts, bei dem ein Zellaufschluss des Nahrungsmittelprodukts auftritt und der notwendige Temperaturanstieg aufgebaut wird, der für die Verarbeitung von Makronährstoffen erforderlich ist. Das System umfasst Mittel, die angeordnet sind, um das Lebensmittelprodukt einem gepulsten elektrischen Feld zur Zerstörung der Zellen des Lebensmittelprodukts und zur Verarbeitung der Makronährstoffe zu unterwerfen, wodurch es für den beabsichtigten Verbrauch und die effiziente Verdauung zubereitet wird.

DE 10 2010 028 780 A1 stellt eine Vorrichtung und ein Verfahren zum satzweisen Erwärmen von Lebensmitteln bereit, insbesondere von Fleisch- und Wurstwaren, die wahlweise in einer elektrisch leitfähigen Hülle angeordnet sein können, in einer Kammer, die zwei beabstandete, mit elektrischer Spannung beaufschlagbare Elektroden aufweist, wobei die elektrische Spannung Wechselspannung bei einer Frequenz von 500 Hz bis 10 MHz ist oder Pulsspannung aus bipolaren, gleichstromfreien Impulsen mit Pulsbreiten bzw. Pulsdauern von 50 ns bis 1 ms.

Es ist die **Aufgabe** der vorliegenden Erfindung, die Nachteile des Standes der Technik zumindest teilweise zu überwinden und insbesondere eine Möglichkeit einer Erwärmung von Lebensmitteln mittels PEF-Feldern bereitzustellen, die besonders kundenfreundlich und kostengünstig ist.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein PEF-Gargerät, aufweisend einen PEF-Generator und mindestens einen Träger zur Aufnahme mindestens eines Aufbewahrungsbehälters für Lebensmittel, wobei der Träger mindestens zwei Elektroden aufweist, zwischen die mindestens ein Aufbewahrungsbehälter einsetzbar ist und von denen mindestens eine Elektrode ("PEF-Elektrode") an den PEF-Generator angeschlossen ist, wobei der jeweilige Träger als eine insbesondere horizontal ausziehbare Schublade mit einem daran verschwenkbar angebrachten oberseitigen Deckel ausgebildet ist und wobei in den Boden und den Deckel der Schublade jeweils mindestens eine Elektroden integriert oder dort angeordnet ist.

Dadurch wird der Vorteil erreicht, dass horizontal besonders großflächige Aufbewahrungsbehälter einfach in die Schublade einsetzbar sind. Dies wiederum erhöht eine Zugänglichkeit der in den Aufbewahrungsbehältern befindlichen Lebensmitteln. Zudem lassen sich solche Aufbewahrungsbehälter besonders einfach reinigen. Darüber hinaus ist eine solche Anordnung besonders preiswert umsetzbar. Ferner ergibt sich der Vorteil, dass ein Raum für durch PEF zu behandelnde Lebensmittel sehr gut ausnutzbar ist.

Der Begriff Lebensmittel kann hier alle Arten tierischer oder pflanzlicher Lebensmittel umfassen, beispielsweise alle Arten von Obst, Gemüse, Fleisch, Fisch oder Geflügel unabhängig davon, ob diese Lebensmittel zu Beginn der Zubereitung roh oder vorverarbeitet vorliegen. Weitere Lebensmittel wie Eierspeisen, Getreide, Reis, Nudeln usw. können ebenfalls zubereitet werden.

Der PEF-Generator erzeugt gepulste elektrische Signale ("PEF-Signale"), die an zumindest eine PEF-Elektrode einer Schublade anlegbar. Weist der PEF-Generator mehrere Signalausgänge auf, können diese in einer Weiterbildung individuell ansteuerbare sein. Ein Signalausgang kann mit einer oder mit mehreren PEF-Elektroden verbindbar sein.

Die PEF-Elektroden sind insbesondere Elektroden, an die ein durch den PEF-Generator erzeugtes gepulstes elektrisches Signal anlegbar ist. Eine PEF-Elektrode bildet mit der ihr gegenüberliegenden Elektrode (PEF-Elektrode oder geerdeten Elektrode) insbesondere Platten eines Kondensators, zwischen denen das PEF-Feld erzeugt wird und zwischen denen das Lebensmittel platziert wird.

Grundsätzlich kann eine Schublade eine oder mehrere Aufnahmen oder Aufnahmebereiche zur Aufnahme jeweils eines oder mehrerer Aufnahmebehälter aufweisen. Entsprechend können jeder Aufnahme mindestens zwei Elektroden zugeordnet sein, von denen mindestens eine Elektrode eine an einen Signalausgang des PEF-Generators anschließbare PEF-Elektrode ist.

Es ist eine Ausgestaltung, dass die mindestens eine PEF-Elektrode in den Deckel integriert ist. Die in den Boden der Schublade integrierte mindestens eine Elektrode ist dann nicht an den PEF-Generator angeschlossen, sondern z.B. geerdet. Im Vergleich zu einer - grundsätzlich ebenfalls möglichen - Anordnung mindestens einer PEF-Elektrode im Deckel und mindestens einer PEF-Elektrode im Boden der Schublade ergibt sich der Vorteil, dass eine besonders hohe Betriebs- und Nutzersicherheit erreicht wird und zudem ein besonders preisgünstiger Aufbau des PEF-Generators und der Schublade ermöglicht wird. Im Vergleich zu einer - grundsätzlich ebenfalls möglichen - geerdeten Elektrode im Deckel und PEF-Elektrode im Boden ergibt sich eine besonders zuverlässige und konstruktiv einfach umsetzbare Erdung.

Es ist eine Ausgestaltung, dass mindestens eine PEF-Elektrode von einer Innenseite des Deckels (die bei geschlossenem Deckel insbesondere nach unten bzw. in Richtung des Innenraums der Schublade zeigt) vorsteht. Dies ergibt den Vorteil, dass zuverlässig erreichbar ist, dass die PEF-Elektrode mit dem in dem Aufnahmebehälter befindlichen Lebensmittel in Berührung kommen kann, da die PEF-Elektrode so besonders einfach in einen obenseitig offenen Aufnahmebehälter eintauchen kann. Die Elektrode ist insbesondere plattenförmig. Die vorstehende PEF-Elektrode ist insbesondere so angeordnet, dass sie bei geschlossenem Deckel in einen für einen jeweiligen Aufbewahrungsbehälter vorgesehenen Raumbereich des Trägers eintaucht. Sie ist vorteilhafterweise so groß, dass sie großflächig in den Aufnahmebehälter eintauchen kann und ihn insbesondere praktisch vollständig überdecken kann. Es ist eine Weiterbildung, dass die vorstehende PEF-Elektrode Löcher aufweist, um sich am Lebensmittel bildende Gase durchzulassen.

Es ist eine Ausgestaltung, dass die mindestens eine vorstehende PEF-Elektrode federnd aufgehängt ist, so dass vorteilhafterweise ein gewisser Andruck an das Lebensmittel sichergestellt werden kann und ein besonders zuverlässiges Schließen des Deckels erreicht wird.

Es ist eine Weiterbildung, dass die deckelseitige PEF-Elektrode zweilagig mit einer (im geschlossenen Zustand des Deckels) oberen Elektrode und einer davon beabstandeten unteren Elektrode ausgebildet ist, wobei die obere Elektrode als ein Testkontakt zur Erkennung ihrer Berührung mit Wasser oder Lebensmittel vorgesehen ist. Wenn die obere oder höhere liegende Elektrode Kontakt mit dem Wasser oder Lebensmittel erkennt, dann ist die tiefer liegende PEF-Elektrode sicher eingetaucht. Dies wiederum erhöht eine Betriebssicherheit und verbessert ein Zubereitungsergebnis. Die obere Elektrode kann eine reine Testelektrode sein oder auch eine PEF-Elektrode sein.

Es ist eine Ausgestaltung, dass jede Schublade mit einem jeweiligen PEF-Generator ausgerüstet ist, der sich insbesondere in einem in Ausziehrichtung der Schublade hinteren Abschnitt der Schublade befindet, während der mindestens eine Aufbewahrungsbehälter in einen vorderen Abschnitt der Schublade einsetzbar ist und insbesondere nur der vordere Abschnitt mittels des zugehörigen Deckels abdeckbar ist. So wird der Vorteil erreicht, dass eine besonders sichere und zuverlässige elektrische Verbindung zwischen dem PEF-Generator und der mindestens einen PEF-Elektrode einer Schublade bereitstellbar ist. Der Träger für den mindestens einen Aufnahmebehälter wird also durch den vorderen Abschnitt gestellt oder gebildet. Der hintere Abschnitt ist vorteilhafterweise für einen Nutzer nicht zugänglich und kann insbesondere permanent gehaust sein, z.B. auch mittels einer Schirmung.

Es ist eine Ausgestaltung, dass die Schublade rückseitig ein Steckverbindungselement mindestens einer jeweiligen lösbaren elektrischen Steckverbindung aufweist und die Steckverbindung im verbundenen Zustand eine elektrische Verbindung zwischen dem PEF-Generator und einer Stromversorgung herstellt. So wird der Vorteil einer ganz besonders betriebssicheren Anordnung erreicht: der PEF-Generator ist nur dann mit Strom versorgbar, wenn die Schublade vollständig oder fast vollständig in einem Gehäuse des PEF-Gargeräts eingeschoben ist und somit die Schublade (bis auf eine insbesondere PEF-neutrale oder sogar schirmende Frontplatte) für einen Nutzer nicht zugänglich ist. Bei dieser Ausgestaltung taucht also ein Steckverbindungselement der Schublade bei Einschub der Schublade in ein passendes Steckverbindungs-Gegenelement ein, das sich z.B. an dem Gehäuse des PEF-Geräts befinden kann, z.B. in eine Rückwand oder Zwischenwand integriert ist. Dadurch ist der PEF-Generator mit elektrischem Strom versorgbar. Wird die Schublade herausgezogen, tritt das Steckverbindungselement aus dem Steckverbindungs-Gegenelement aus, und eine Stromzufuhr zu dem PEF-Generator wird unterbrochen.

Es ist eine alternative Ausgestaltung, dass die Schublade rückseitig ein Steckverbindungselement mindestens einer jeweiligen lösbaren elektrischen Steckverbindung aufweist und die Steckverbindung im verbundenen Zustand eine elektrische Verbindung zwischen einem gehäuseseitigen PEF-Generator und der mindestens einen deckelseitigen PEF-Elektrode herstellt. Der PEF-Generator ist hier also nicht in die Schublade integriert, sondern in das Gehäuse des PEF-Geräts. Dies ergibt den Vorteil, dass die Schublade besonders einfach ausgestaltbar ist. Bei dieser Ausgestaltung taucht das Steckverbindungselement bei Einschub der Schublade in ein passendes Steckverbindungs-Gegenelement ein, das mir dem PEF-Generator verbunden ist. Dadurch ist der PEF-Generator von der mindestens einen PEF-Elektrode getrennt. Wird die Schublade herausgezogen, tritt das Steckverbindungselement aus dem Steckverbindungs-Gegenelement aus, und eine Signalverbindung zu dem PEF-Generator wird unterbrochen.

Die Verwendung einer Steckverbindung ergibt im Vergleich zu einer Stromversorgung über flexible elektrische Leitungen den weiteren Vorteil, dass eine Bruchgefahr der Leitungen vermieden wird.

Es ist eine Ausgestaltung, dass der Deckel so ausgestaltet und an der Schublade angeordnet ist, dass er sich erst dann merklich öffnen lässt, wenn die Schublade praktisch voll ausgefahren ist. Dadurch wird vorteilhafterweise eine besonders hohe Betriebssicherheit erreicht. Diese Ausgestaltung kann z.B. so umgesetzt werden, dass das Gehäuse eine vorderseitige Öffnung ("Einschuböffnung") zum Einführen oder Einschieben der Schublade aufweist und ein oberer Rand der Einschuböffnung einen nur geringen vertikalen Abstand zu dem geschlossenen Deckel aufweist. Eine Drehachse des Deckels kann dann erst im voll ausgezogenen Zustand der Schublade vor der Einschuböffnung positioniert sein.

Es ist eine Weiterbildung, dass das PEF-Gargerät an seinem die Schublade aufnehmenden Gehäuse eine Einschuböffnung aufweist und diese Einschuböffnung am oberen Rand mindestens einen lokalen Anschlag gegenüber dem Deckel aufweist. Dies ermöglicht eine besonders einfache Umsetzung des Anschlags, der dann durch den oberen Rand der Einschuböffnung gebildet werden kann. Die Durchtrittsöffnung ist bei vollständig eingeschobener Schublade insbesondere durch eine Frontplatte der Schublade verschlossen oder abgedeckt.

Es ist eine Ausgestaltung, dass die Schublade einen Überwachungssensor zum Überwachen auf einen Schließzustand des Deckels aufweist. Dies kann eine Betriebssicherheit weiter erhöhen. So kann dann, wenn mittels des Überwachungssensors ein geöffneter Zustand des Deckels erkannt wird, der zugehörige PEF-Generator deaktiviert werden oder sein. Es ist eine Weiterbildung, dass der Überwachungssensor mindestens einen Schalter, insbesondere Kontaktschalter zu dem Deckel, umfasst. Dies ist eine besonders zuverlässige, kompakte und kostengünstige Umsetzung.

Es ist eine Weiterbildung, dass in dem Signalpfad zwischen dem PEF-Generator und der mindestens einen PEF-Elektrode mindestens ein Stromsensor vorhanden ist. Der Stromsensor kann mit einer Auswerteeinrichtung verbunden sein, die auch mit einem elektrisch schaltbaren Schalter verbunden ist, welcher in dem Signalpfad zwischen dem PEF-Generator und der mindestens einen PEF-Elektrode vorhanden ist, insbesondere seriell zu dem mindestens einen Stromsensor. So lassen sich vorteilhafterweise Ströme zu der PEF-Elektrode auswerten und ggf. unterbrechen.

Es ist eine Weiterbildung, dass in dem Signalpfad zwischen dem PEF-Generator und der mindestens einen PEF-Elektrode ein Strombegrenzer angeordnet ist. Dies vermeidet Überströme in der PEF-Elektrode besonders zuverlässig und erhöht eine Betriebssicherheit.

Es ist eine Ausgestaltung, dass die bodenseitige - insbesondere geerdete - Elektrode eine Auflagefläche für den mindestens einen Aufbewahrungsbehälter bildet. So kann die bodenseitige Elektrode besonders nah an den mindestens einen Aufbewahrungsbehälter herangeführt werden, was eine besonders effektive PEF-Behandlung des in dem mindestens einen Aufbewahrungsbehälter befindlichen Lebensmittels ermöglicht. Die Elektrode bildet dann insbesondere eine Oberseite des Bodens.

Es ist eine Ausgestaltung, dass die Schublade über ein elektrisch leitfähiges Auszugssystem mit einem geerdeten Gehäuse des PEF-Gargeräts verbunden ist und die bodenseitige Elektrode über das Auszugssystem mit dem Gehäuse verbunden ist. Dies ermöglicht eine besonders kompakte und zuverlässige Anordnung zur Erdung der bodenseitigen Elektrode. Das Auszugssystem kann z.B. mehrere Teleskopauszüge oder Schienenauszüge aufweisen, von denen mindestens einer elektrisch leitfähig ist.

Es ist eine Ausgestaltung, dass die Schublade mindestens einen Sensor zum Abfühlen mindestens einer Eigenschaft des Lebensmittels umfasst. Dadurch wird vorteilhafterweise eine Überwachung des Lebensmittels ermöglicht, was eine Gelingsicherheit verbessert.

Der mindestens eine Sensor kann z.B. mindestens einen Temperatursensor zum Abfühlen eines Temperatur des Lebensmittels umfassen. Dazu kann die Temperatur direkt erfasst werden oder indirekt über einer Erfassung der Temperatur des Aufnahmebehälters.

Ein Temperatursensor kann ein Kontaktsensor sein, z.B. ein Thermoelement, oder ein kontaktlos messender Sensor sein, z.B. eine IR-Diode, ein Thermopile, usw. sein.

Der mindestens eine Sensor kann alternativ oder zusätzlich mindestens einen Leitfähigkeitssensor zur Messung der elektrischen Leitfähigkeit des Lebensmittels bzw. der Flüssigkeit in dem Aufnahmebehälter umfassen.

Es ist eine Ausgestaltung, dass die Schublade mindestens einen Sensor zum Abfühlen von bei PEF-Behandlung erzeugten Feldern, Spannungen und/oder Strömen in dem Lebensmittel umfasst. Dadurch wird Betriebssicherheit und/oder Gelingsicherheit verbessert. Dies kann ein Abfühlen einer Form der Spannungspulse und/oder der Strompulse umfassen. Unter einer Form kann beispielsweise eine Höhe der Pulse, eine Steilheit der steigenden und/oder der fallenden Flanken der Pulse und/oder eine Dauer der Pulse verstanden werden.

Auch kann eine Schublade mindestens einen Aktor zur nicht-elektrischen Behandlung des Lebensmittels aufweisen. So kann die Gelingsicherheit weiter verbessert werden. In einer Weiterbildung umfasst der mindestens eine Aktor einen Rührer, mittels dessen der Inhalt des Aufnahmebehälters in Bewegung setzbar ist. So kann vorteilhafterweise eine Bildung von Gasblasen im Aufnahmebehälter vermieden werden und/oder eine Temperatur in dem Lebensmittel vergleichmäßigt werden. Der Rührer kann beispielsweise ein mechanischer angetriebener, z.B. kreisender, Rührer, ein vibrierend angetriebener Rührer oder ein Ultraschallrührer sein.

Es ist eine Ausgestaltung, dass das PEF-Gargerät ein Haushaltsgerät ist.

Dies Aufgabe wird auch gelöst durch ein PEF-System, aufweisend ein PEF-Gargerät wie oben beschrieben und mindestens einen in eine Schublade wieder entnehmbar eingesetzten Aufbewahrungsbehälter. Das PEF-System kann analog zu dem PEF-Gargerät ausgebildet sein und weist die gleichen Vorteile auf.

Es ist eine Ausgestaltung, dass die Aufbewahrungsbehälter schalenförmige Aufbewahrungsbehälter sind, die insbesondere obenseitig offen sind, um z.B. ein Eintauchen der PEF-Elektrode(n) zu erleichtern. In einer Schublade können ein oder mehrere Aufbewahrungsbehälter unterbringbar sein, was z.B. von einer Größe des Aufbewahrungsbehälters oder der Aufbewahrungsbehälter abhängt. Die Aufbewahrungsbehälter können insbesondere in Draufsicht in verschiedenen Größen vorliegen.

Der mindestens eine Aufbewahrungsbehälter kann eine Höhe aufweisen, die geringer ist als eine horizontale Ausdehnung, z.B. Kantenlänge.

Ein Aufbewahrungsbehälter kann insbesondere einen elektrisch leitfähigen Boden aufweisen, so dass dieser Boden eine bodenseitige Elektrode des Schublade kontaktieren kann. Der Boden des Aufbewahrungsbehälter kann dann selbst als PEF-Elektrode dienen, was eine Effektivität der Lebensmittelbehandlung erhöht. Insbesondere kann der Boden des Aufbewahrungsbehälters, und ggf. die oberseitig freiliegende bodenseitige Elektrode der Schublade, aus Edelstahl bestehen, was einen besonders wartungsarmen und langlebigen Aufbau ermöglicht. Die Seitenwände des Aufbewahrungsbehälters und ggf. der Schublade bestehen vorteilhafterweise aus einem elektrisch isolierenden Material, z.B. aus elektrisch isolierendem Kunststoff. Alternativ kann ein Aufbewahrungsbehälter vollständig aus für elektrische Felder durchlässigem Material bestehen, z.B. aus Kunststoff.

Für den Fall, dass die unterschiedlichen Aufbewahrungsbehältern zugeordneten PEF-Elektroden individuell ansteuerbar oder betreibbar sind, ergibt sich der Vorteil, dass in den einzelnen Aufbewahrungsbehältern verschiedene Behandlungsabläufe oder Regimes (z.B. umfassend unterschiedliche Betriebseinstellungen, Zeitdauern usw.) gefahren werden können. Mithin ist eine gleichzeitige Zubereitung auch sehr verschiedener Lebensmittel möglich. Dies wiederum erleichtert oder verbessert eine Nutzerfreundlichkeit des Geräts.

Das PEF-Gargerät kann ein oder mehrere PEF-Module aufweisen, die jeweilige Gehäuse und Schubladen wie oben beschrieben aufweisen. Dazu kann das PEF-Gargerät ein Aufnahmegestell für mindestens zwei z.B. übereinander anordenbare PEF-Module aufweisen. Das Gestell ist insbesondere erdbar oder geerdet, so dass durch eine elektrische Verbindung des Gestells mit darin eingesetzten PEF-Modulen auch die Gehäuse der PEF-Module erdbar sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines PEF-Geräts mit einem darin eingesetzten PEF-Modul mit vollständig eingeschobener Schublade;
- Fig.2: zeigt als Schnittdarstellung in Seitenansicht eine Skizze des PEF-Moduls aus Fig.1 mit teilweise ausgezogener Schublade;
- Fig.3: zeigt als Schnittdarstellung in Seitenansicht eine Skizze des PEF-Moduls aus Fig.1 und Fig.2 mit vollständig ausgezogener Schublade;
- Fig.4: zeigt als Schnittdarstellung in Seitenansicht eine Skizze eines alternativen PEF-Moduls mit teilweise ausgezogener Schublade;
- Fig.5: zeigt als Schnittdarstellung in Seitenansicht eine Skizze des alternativen PEF-Moduls mit vollständig ausgezogener Schublade und
- Fig.6: zeigt ein Ersatzschaltbild einer Schaltung zur PEF-Behandlung von Lebensmittel mittels eines PEF-Generators des PEF-Moduls.

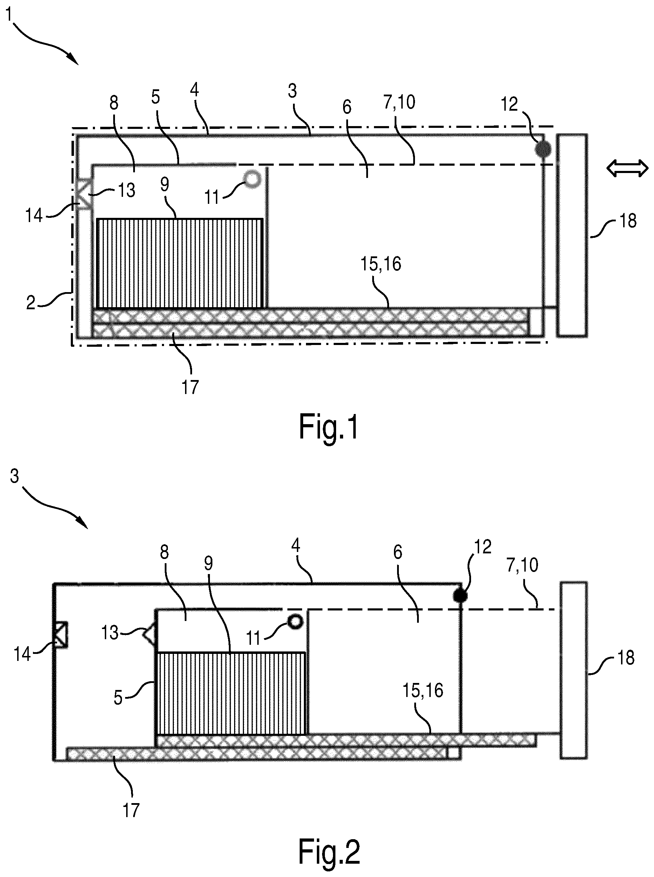

**Fig.1** zeigt als Schnittdarstellung in Seitenansicht eine Skizze eines als Haushaltsgeräts vorgesehenen PEF-Gargeräts 1. Das PEF-Gargerät 1 weist ein Gestell 2 auf, in das ein PEF-Modul 3 eingesetzt ist. Das Gestell 2 ist geerdet.

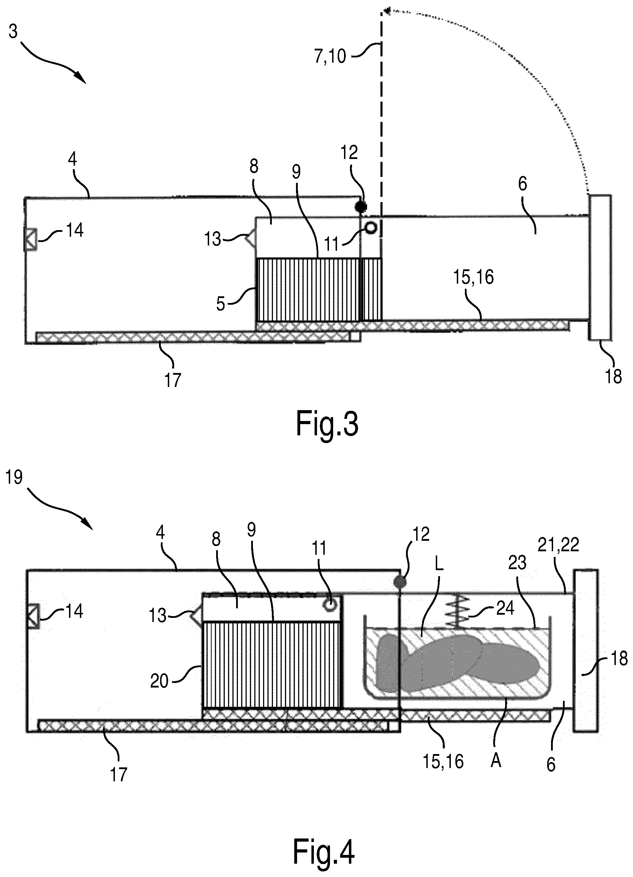

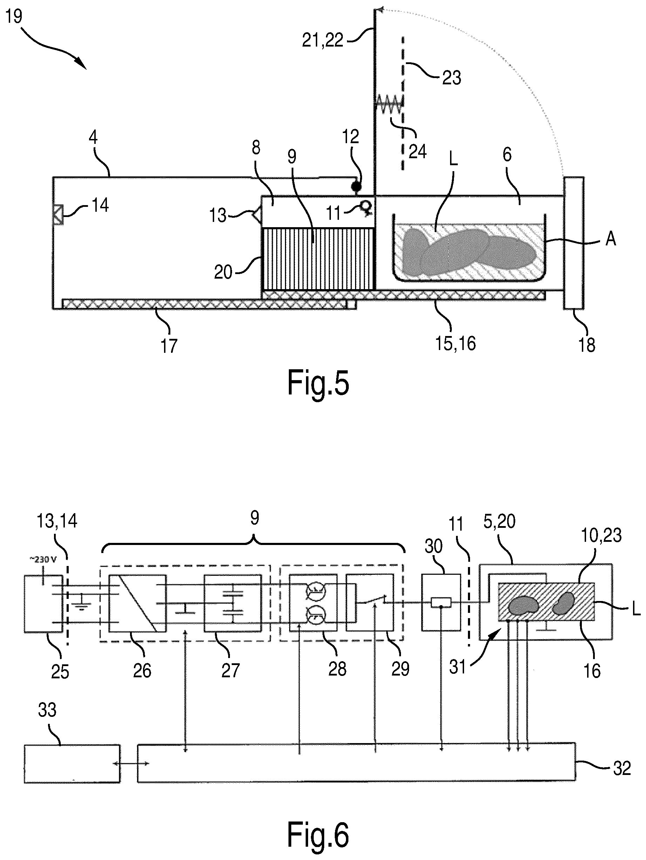

Das PEF-Modul 3 weist ein Gehäuse 4 mit einer vorderseitigen Einschuböffnung auf, in dem eine Schublade 5 horizontal beweglich gelagert ist, wie durch den Doppelpfeil angedeutet. Die Schublade 5 weist zwei Abschnitte oder "Kompartments" auf, nämlich einen in Auszugsrichtung vorderen Abschnitt 6 zur Aufnahme von Aufnahmebehältern A (siehe Fig.4 und Fig.5), der durch einen horizontal verschwenkbaren Deckel 7 abgedeckt ist, und einen in Auszugsrichtung hinteren Abschnitt 8, in dem ein PEF-Generator 9 untergebracht ist. Der vordere Abschnitt 6 dient somit als Träger für mindestens einen Aufnahmebehälter A. Der hintere Abschnitt 8 ist geschlossen, so dass der PEF-Generator 9 für einen Nutzer nicht zugänglich ist.

In den Deckel 7 ist großflächig eine PEF-Elektrode 10 integriert bzw. dient der Deckel auch als PEF-Elektrode. Die PEF-Elektrode 10 ist über einen Kontaktschalter 11 mit einem Signalausgang des PEF-Generators 9 verbunden. Bei geschlossenem Deckel 7 ist der Kontaktschalter 11 leitend geschaltet, so dass von dem Signalausgang des PEF-Generators 9 ausgegebene gepulste elektrische Signale an die PEF-Elektrode 10 angelegt werden. Bei geöffnetem Deckel 7 ist der Kontaktschalter 11 hingegen unterbrechend geschaltet.

Die Oberseite der Einschuböffnung bildet einen Anschlag 12 gegenüber dem Deckel 7 oder weist einen solchen Anschlag 12 auf, so dass sich der Deckel 7 erst öffnen lässt, wenn die Schublade 5 praktisch vollständig ausgezogen ist.

Im eingeschobenen Zustand der Schublade 5 taucht ein an einer Rückwand der Schublade 5 angeordnetes Steckverbindungselement 13 in ein Steckverbindungs-Gegenelement 14 des Gestells 2 ein und bildet dann eine elektrisch leitende Steckverbindung 13, 14. Das Steckverbindungselement 13 ist mit dem PEF-Generator 9 verbunden, während das Steckverbindungs-Gegenelement 14 mit einer - z.B. an dem Gestell 2 angeordneten - Stromversorgung (siehe Fig.6) verbunden ist. Im verbundenen Zustand der Steckverbindung 13, 14 ist der PEF-Generator somit mit Strom versorgbar. Die PEF-Elektrode 10 ist als nur dann mit PEF-Signalen beaufschlagbar, wenn der Deckel 7 geschlossen ist und die Schublade 5 vollständig in das Gehäuse 4 eingeschoben ist.

Ein Boden 15 der Schublade 5 ist zumindest oberseitig - insbesondere ganzflächig - als metallische Elektrode 16 ausgebildet. Die Elektrode 16 ist elektrisch mit einem Auszugssystem 17 verbunden, welches die Schublade 5 verschieblich mit dem Gehäuse 4 verbindet, und so mit dem Gehäuse 4 elektrisch verbunden. Da das Gehäuse 4, z.B. über das Gestell 2, geerdet ist, ist auch die Elektrode 16 über das Auszugssystem 17 geerdet. Da sich die geerdete Elektrode 16 bis in den hinteren Abschnitt 8 erstreckt und dort mit dem PEF-Generator 9 verbunden ist, kann sie auch der Erdung des PEF-Generators 9 dienen.

Der vordere Abschnitt 6 der Schublade 5 weist also zwei Elektroden 10, 16 auf, zwischen die mindestens ein Aufbewahrungsbehälter einsetzbar ist

Vorderseitig weist die Schublade 5 eine von einem Nutzer handhabbare Frontplatte 18 auf, z.B. um die Schublade 5 auszuziehen und einzuschieben.

**Fig.2** zeigt als Schnittdarstellung in Seitenansicht eine Skizze des PEF-Moduls 3 mit teilweise ausgezogener Schublade 5. Durch das Ausziehen ist das Steckverbindungselement 13 nun von dem Steckverbindungs-Gegenelement 14 getrennt, so dass die Stromversorgung zu dem PEF-Generator 9 unterbrochen ist. Aufgrund des Anschlags 12 lässt sich der Deckel 7 noch nicht öffnen.

**Fig.3** zeigt als Schnittdarstellung in Seitenansicht eine Skizze des PEF-Moduls 3 mit vollständig ausgezogener Schublade 5 und geöffnetem Deckel 7. Da sich die Schwenkachse des Deckels 7 nun vor dem Anschlag 12 befindet, kann der Deckel 7 geöffnet werden, wodurch der vordere Abschnitt 6 für einen Nutzer zugänglich ist, z.B. ein Einsetzen oder Entnehmen von Aufnahmebehältern A. Mit geöffnetem Deckel 7 ist der Kontaktschalter 11 geöffnet, so dass auch eine elektrische Verbindung des PEF-Generators 9 zu der PEF-Elektrode 10 des Deckels 7 unterbrochen ist. Der hintere Abschnitt 8 ist für einen Nutzer weiterhin nicht zugänglich.

**Fig.4** zeigt als Schnittdarstellung in Seitenansicht eine Skizze eines alternativen PEF-Moduls 19 mit teilweise ausgezogener Schublade 20. Das PEF-Moduls 19 ist ähnlich zu dem PEF-Modul 3 ausgebildet, wobei jedoch nun der Deckel 21 unterschiedlich ausgebildet ist. Insbesondere weist der Deckel 21 ein nur mechanisch wirkendes Deckelteil 22 auf, von dessen Innenseite eine plattenförmige PEF-Elektrode 23 über ein Federelement 24 vorsteht. Die PEF-Elektrode 23 kann in eine offene Oberseite eines schalenförmigen Aufnahmebehälters A eintauchen und das darin befindliche Lebensmittel L bzw. die das Lebensmittel umgebende salzhaltige Flüssigkeit kontaktieren. Dabei ist die PEF-Elektrode 23 insbesondere so geformt, dass die den Aufnahmebehälter A praktisch vollständig abdeckt. So wird eine besonders effektive PEF-Behandlung des Lebensmittels L erreicht.

Das Federelement 24 ermöglicht eine Anpassung der Position der PEF-Elektrode 23 an das Lebensmittel L und ermöglicht einen zuverlässigen Verschluss des Deckels 21.

In einer Weiterbildung weist die PEF-Elektrode 23 Löcher auf, damit eine eventuelle Gasbildung durch das Lebensmittel L nicht zu einem (teilweisen) Kontaktverlust zwischen der PEF-Elektrode 23 und dem Inhalt des Aufnahmebehälters A führt.

Alternativ kann auch in das Deckelteil 22 eine PEF-Elektrode integriert sein.

Der Aufnahmebehälter A kann insbesondere einen metallischen Boden aufweisen, so dass er großflächig in Kontakt mit der Elektrode 16 treten kann und der Boden des Aufnahmebehälters A dann selbst als Elektrode dienen kann.

**Fig.5** zeigt als Schnittdarstellung in Seitenansicht eine Skizze des alternativen PEF-Moduls 19 mit vollständig ausgezogener Schublade 20 und geöffnetem Deckel 21.

**Fig.6** zeigt ein vereinfachtes Ersatzschaltbild einer Schaltung zur PEF-Behandlung von Lebensmittel L mittels eines PEF-Generators 9 des PEF-Moduls 3 oder 19. Die Schaltung weist z.B. an dem Gestell 2 eine Stromversorgungeinheit 25 auf, die einen Störfilter aufweisen kann. Die Stromversorgungeinheit 25 ist über die Steckverbindung 13, 14 mit einem Stromanschluss des PEF-Generators 9 verbunden. Der PEF-Generator 9 weist einen Spannungsgenerator 26 auf, der ausgangsseitig mit einer Kondensatorbank 27 verbunden ist. Die Kondensatorbank 27 dient dazu, die von dem Spannungsgenerator 26 ausgegebene Spannung stabil zu halten. Die Kondensatorbank 27 ist ausgangsseitig mit einem Pulsgenerator 28 zur Erzeugung scharfer Spannungspulse verbunden. Der Pulsgenerator 28 wiederum ist ausgangsseitig über einen elektrisch schaltbaren Schalter 29, einen Stromsensor und -begrenzer 30 sowie den Schalter 11 mit der PEF-Elektrode 10, 23 der Schublade 5 bzw. 20 verbunden. Die andere Elektrode 16, die mit der PEF-Elektrode 10, 23 als Kondensatorplatten eines Kondensators dient, zwischen denen das Lebensmittel L einbringbar ist, ist geerdet bzw. liegt auf Masse.

An der Schublade 5 bzw. 20 sind hier mehrere Sensoren 31 vorhanden, mittels derer sich z.B. eine Temperatur und/oder eine elektrische Leitfähigkeit in dem Aufnahmebehälter A, eine Form der Spannungspulse und/oder Strompulse am Ort des Lebensmittels L usw. erfassen lässt.

Auch umfasst die Schaltung eine Elektronik 32 zur Steuerung der Schaltung, beispielsweise zum Auswerten der Messignale des Stromsensors 30, zur Ansteuerung (z.B. zum Öffnen und Schließen) des Schalters 29, insbesondere auf Grundlage einer Auswertung der Messignale des Stromsensors 30, zur Ansteuerung (z.B. Ein- und Ausschalten, zur Pulsformung usw.) und Überwachung (z.B. der Ausgangsspannungen) des PEF-Generators 9 sowie ggf. zur Ansteuerung einer Benutzerschnittstelle 33 des PEF-Gargeräts 1.

Selbstverständlich ist die vorliegende Erfindung nicht auf das gezeigte Ausführungsbeispiel beschränkt.

So kann die Schublade allgemein ein oder mehrere Sensoren zum Abfühlen mindestens einer Eigenschaft des Lebensmittels und/oder des bei PEF-Behandlung durch das Lebensmittel geleiteter Felder und/oder Spannungen / Ströme umfassen.

Auch kann eine Schublade allgemein ein oder mehrere Aktoren zur nicht-elektrischen Behandlung des Lebensmittels aufweisen, z.B. einen Rührer.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: PEF-Gargerät
- 2: Gestell
- 3: PEF-Modul
- 4: Gehäuse
- 5: Schublade
- 6: Vorderer Abschnitt der Schublade
- 7: Deckel
- 8: Hinterer Abschnitt der Schublade
- 9: PEF-Generator
- 10: PEF-Elektrode
- 11: Kontaktschalter
- 12: Anschlag
- 13: Steckverbindungselement
- 14: Steckverbindungs-Gegenelement
- 15: Boden der Schublade
- 16: Elektrode
- 17: Auszugssystem
- 18: Frontplatte
- 19: PEF-Modul
- 20: Schublade
- 21: Deckel
- 22: Deckelteil
- 23: PEF-Elektrode
- 24: Federelement
- 25: Stromversorgungeinheit
- 26: Spannungsgenerator
- 27: Kondensatorbank
- 28: Pulsgenerator
- 29: Elektrisch schaltbarer Schalter
- 30: Stromsensor und -begrenzer
- 31: Sensor
- 32: Elektronik
- 33: Benutzerschnittstelle
- A: Aufnahmebehälter
- L: Lebensmittel

## Patentansprüche

1. PEF-Gargerät (1), aufweisend einen PEF-Generator (9) und mindestens einen Träger zur Aufnahme mindestens eines Aufbewahrungsbehälters (A) für Lebensmittel (L), wobei der Träger (6) mindestens zwei Elektroden (10, 16; 23, 16) aufweist, zwischen die mindestens ein Aufbewahrungsbehälter (A) einsetzbar ist und von denen mindestens eine PEF-Elektrode (10; 23) an den PEF-Generator (9) angeschlossen ist, **dadurch gekennzeichnet** indem
- der jeweilige Träger als eine Schublade (5; 20) mit einem daran verschwenkbar angebrachten oberseitigen Deckel (7; 21) ausgebildet ist,
- und in einen Boden (15) und den Deckel (7; 21) der Schublade (5; 20) jeweils mindestens eine der Elektroden (10, 16; 23, 16) integriert ist,
- jede Schublade (5; 20) mit einem jeweiligen PEF-Generator (9) ausgerüstet ist.

2. PEF-Gargerät (1) nach Anspruch 1, wobei die mindestens eine PEF-Elektrode (10; 23) in den Deckel (7; 21) integriert ist.

3. PEF-Gargerät (1) nach einem der vorhergehenden Ansprüche, wobei mindestens eine PEF-Elektrode (23) von einer Innenseite des Deckels (21) vorsteht.

4. PEF-Gargerät (1) nach Anspruch 3, wobei die mindestens eine vorstehende PEF-Elektrode (23) federnd aufgehängt ist.

5. PEF-Gargerät (1) nach einem der vorhergehenden Ansprüche, wobei jede Schublade (5; 20) mit einem jeweiligen PEF-Generator (9) ausgerüstet ist, der sich in einem in Ausziehrichtung der Schublade (5; 20) hinteren Abschnitt (8) der Schublade (5; 20) befindet, während der mindestens eine Aufbewahrungsbehälter (A) in einen vorderen Abschnitt (6) der Schublade einsetzbar ist und nur der vordere Abschnitt (6) mittels des zugehörigen Deckels (7; 21) abdeckbar ist.

6. PEF-Gargerät (1) nach Anspruch 5, wobei die Schublade (5; 20) rückseitig ein Steckverbindungselement (13) mindestens einer jeweiligen lösbaren elektrischen Steckverbindung (13, 14) aufweist und die Steckverbindung (13, 14) im verbundenen Zustand eine elektrische Verbindung zwischen dem PEF-Generator (9) und einer Stromversorgung (25) herstellt.

7. PEF-Gargerät (1) nach einem der Ansprüche 1 bis 4, wobei die Schublade rückseitig ein Steckverbindungselement (13) mindestens einer jeweiligen lösbaren elektrischen Steckverbindung (13, 14) aufweist und die Steckverbindung (13, 14) im verbundenen Zustand eine elektrische Verbindung zwischen einem gehäuseseitigen PEF-Generator (9) und der mindestens einen deckelseitigen PEF-Elektrode (10; 23) herstellt.

8. PEF-Gargerät (1) nach einem der vorhergehenden Ansprüche, wobei der Deckel (7; 21) so ausgestaltet und an der Schublade (5; 20) angeordnet ist, dass sich der Deckel (7; 21) erst dann merklich öffnen lässt, wenn die Schublade (5; 20) voll ausgefahren ist, wobei in einer Ausgestaltung das PEF-Gargerät (1) an seinem die Schublade (5; 20) aufnehmenden Gehäuse (4) eine Einschuböffnung zum Durchtritt der Schublade (5; 20) aufweist und diese Einschuböffnung am oberen Rand einen Anschlag (12) gegenüber dem Deckel (7; 21) aufweist.

9. PEF-Gargerät (1) nach einem der vorhergehenden Ansprüche, wobei die Schublade (5; 20) einen Überwachungssensor (11) zum Überwachen auf einen Schließzustand des Deckels (7; 21) aufweist.

10. PEF-Gargerät (1) nach einem der vorhergehenden Ansprüche, wobei die Schublade (5; 20) über ein elektrisch leitfähiges Auszugssystem (17) mit einem Gehäuse (4) des PEF-Gargeräts (1) verbunden ist und die bodenseitige Elektrode (16) über das Auszugssystem (17) mit dem geerdeten Gehäuse (4) verbunden ist.

11. PEF-Gargerät (1) nach einem der vorhergehenden Ansprüche, wobei die Schublade mindestens einen Sensor (31) zum Abfühlen mindestens einer Eigenschaft des Lebensmittels (L) umfasst.

12. PEF-Gargerät (1) nach einem der vorhergehenden Ansprüche, wobei die Schublade (5; 20) mindestens einen Sensor (31) zum Abfühlen von bei PEF-Behandlung erzeugten Feldern, Spannungen und/oder Strömen in dem Lebensmittel umfasst.

13. PEF-Gargerät (1) nach einem der vorhergehenden Ansprüche, wobei die Schublade (5; 20) mindestens einen Aktor zur nicht-elektrischen Behandlung des Lebensmittels (L) aufweist.

14. PEF-Gargerät (1) nach einem der vorhergehenden Ansprüche, wobei das PEF-Gargerät (1) ein Haushaltsgerät ist.

15. PEF-Garsystem (1, A), aufweisend ein PEF-Gargerät (1) nach einem der vorhergehenden Ansprüche und mindestens einen in eine Schublade (5; 20) eingesetzten Aufbewahrungsbehälter (A).

## Claims

1. PEF cooking appliance (1), having a PEF generator (9) and at least one carrier for receiving at least one storage container (A) for food (L), wherein the carrier (6) has at least two electrodes (10, 16; 23, 16), between which at least one storage container (A) can be inserted and of which at least one PEF electrode (10; 23) is connected to the PEF generator (9), **characterised in that**
- the respective carrier is embodied as a drawer (5; 20) with a top cover (7; 21) pivotably attached thereto,
- and in each case at least one of the electrodes (10, 16; 23, 16) is integrated into a base (15) and the cover (7; 21) of the drawer (5; 20),
- each drawer (5; 20) is equipped with a respective PEF generator (9).

2. PEF cooking appliance (1) according to claim 1, wherein the at least one PEF electrode (10; 23) is integrated into the cover (7; 21).

3. PEF cooking appliance (1) according to one of the preceding claims, wherein at least one PEF electrode (23) projects from an interior of the cover (21).

4. PEF cooking appliance (1) according to claim 3, wherein the at least one projecting PEF electrode (23) is resiliently suspended.

5. PEF cooking appliance (1) according to one of the preceding claims, wherein each drawer (5; 20) is equipped with a respective PEF generator (9), which is located in a rear section (8) of the drawer (5; 20) in a pull-out direction of the drawer (5; 20), while the at least one storage container (A) can be inserted into a front section (6) of the drawer and only the front section (6) can be covered by means of the associated cover (7, 21).

6. PEF cooking appliance (1) according to claim 5, wherein on the rear side the drawer (5; 20) has a plug connection element (13) of at least one respective detachable electrical plug connection (13, 14), and the plug connection (13, 14), in the connected state, establishes an electrical connection between the PEF generator (9) and a power supply (25).

7. PEF cooking appliance (1) according to one of claims 1 to 4, wherein on the rear side the drawer has a plug connection element (13) of at least one respective detachable electrical plug connection (13, 14) and the plug connection (13, 14), in the connected state, establishes an electrical connection between a housing-side PEF generator (9) and the at least one cover-side PEF electrode (10; 23).

8. PEF cooking appliance (1) according to one of the preceding claims, wherein the cover (7; 21) is configured and arranged on the drawer (5; 20) so that the cover (7; 21) can only then noticeably open if the drawer (5; 20) is fully extended, wherein in one embodiment the PEF cooking appliance (1) has an insertion opening on its housing (4) receiving the drawer (5; 20) for allowing the drawer (5; 20) to pass through and this insertion opening has a stop (12) in relation to the cover (7; 21) on the upper edge.

9. PEF cooking appliance (1) according to one of the preceding claims, wherein the drawer (5; 20) has a monitoring sensor (11) for monitoring a closure state of the cover (7; 21).

10. PEF cooking appliance (1) according to one of the preceding claims, wherein the drawer (5; 20) is connected to a housing (4) of the PEF cooking appliance (1) by way of an electrically conductive pull-out system (17), and the base-side electrode (16) is connected to the earthed housing (4) by way of the pull-out system (17).

11. PEF cooking appliance (1) according to one of the preceding claims, wherein the drawer comprises at least one sensor (31) for sensing at least one property of the food (L).

12. PEF cooking appliance (1) according to one of the preceding claims, wherein the drawer (5; 20) comprises at least one sensor (31) for sensing fields, voltages and/or currents in the food generated during the PEF treatment.

13. PEF cooking appliance (1) according to one of the preceding claims, wherein the drawer (5; 20) has at least one actuator for the non-electrical treatment of food (L).

14. PEF cooking appliance (1) according to one of the preceding claims, wherein the PEF cooking appliance (1) is a household appliance.

15. PEF cooking system (1, A) having a PEF cooking appliance (1) according to one of the preceding claims and at least one storage container (A) inserted into a drawer (5; 20).

## Revendications

1. Appareil de cuisson PEF (1) comportant un générateur PEF (9) et au moins un support pour accueillir au moins un récipient de stockage (A) pour des aliments (L), dans lequel le support (6) comporte au moins deux électrodes (10, 16 ; 23, 16) entre lesquelles on peut insérer un récipient de stockage (A) et parmi lesquelles au moins une électrode PEF (10 ; 23) est raccordée au générateur PEF (9), **caractérisé en ce que**
- le support respectif est conçu comme un tiroir (5 ; 20) avec un couvercle (7 ; 21) sur le dessus fixé de façon pivotante, et
- au moins une des électrodes (10, 16 ; 23, 16) est intégrée respectivement dans un fond (15) et dans le couvercle (7 ; 21) du tiroir (5 ; 20),
- chaque tiroir (5 ; 20) est équipé d'un générateur PEF (9) respectif.

2. Appareil de cuisson PEF (1) selon la revendication 1, dans lequel l'au moins une électrode PEF (10 ; 23) est intégrée dans le couvercle (7 ; 21).

3. Appareil de cuisson PEF (1) selon l'une des revendications précédentes, dans lequel au moins une électrode PEF (23) dépasse de la face interne du couvercle (21).

4. Appareil de cuisson PEF (1) selon la revendication 3, dans lequel l'au moins une électrode PEF saillante (23) est accrochée élastiquement.

5. Appareil de cuisson PEF (1) selon l'une des revendications précédentes, dans lequel chaque tiroir (5 ; 20) est équipé d'un générateur PEF (9) respectif qui se trouve dans une section (8) du tiroir (5 ; 20) à l'arrière quand on tire le tiroir (5 ; 20), tandis que l'au moins un récipient de stockage (A) peut être inséré dans une section avant (6) du tiroir et seule la section avant (6) peut être recouverte par le couvercle correspondant (7 ; 21).

6. Appareil de cuisson PEF (1) selon la revendication 5, dans lequel le tiroir (5 ; 20) comporte à l'arrière un élément de raccordement électrique (13) d'au moins une prise électrique (13, 14) respective électriquement amovible et la prise électrique (13, 14) en état raccordé génère une liaison électrique entre le générateur PEF (9) et une alimentation électrique (25).

7. Appareil de cuisson PEF (1) selon l'une des revendications 1 à 4, dans lequel le tiroir comporte à l'arrière un élément de raccordement électrique (13) d'au moins une prise électrique (13, 14) respective électriquement amovible et la prise électrique (13, 14) en état raccordé génère une liaison électrique entre un générateur PEF (9) dans le boîtier et l'au moins une électrode PEF (10 ; 23) dans le couvercle.

8. Appareil de cuisson PEF (1) selon l'une des revendications précédentes, dans lequel le couvercle (7 ; 21) est conçu et disposé sur le tiroir (5 ; 20) de sorte que le couvercle (7 ; 21) ne s'ouvre sensiblement que lorsque le tiroir (5 ; 20) est totalement sorti, dans lequel dans un mode de réalisation l'appareil de cuisson PEF (1) comporte sur son boîtier (4) qui accueille le tiroir (5 ; 20) une ouverture d'insertion pour laisser passer le tiroir (5 ; 20) et cette ouverture d'insertion comporte à son bord supérieur une butée (12) contre le tiroir (7 ; 21).

9. Appareil de cuisson PEF (1) selon l'une des revendications précédentes, dans lequel le tiroir (5 ; 20) comporte un capteur de surveillance (11) pour surveiller un état de fermeture du couvercle (7 ; 21).

10. Appareil de cuisson PEF (1) selon l'une des revendications précédentes, dans lequel le tiroir (5 ; 20) est lié à un boîtier (4) de l'appareil de cuisson (1) via un système de tirage (17) électriquement conducteur et l'électrode du fond (16) est liée au boîtier relié à la terre (4) via le système de tirage (17).

11. Appareil de cuisson PEF (1) selon l'une des revendications précédentes, dans lequel le tiroir comprend au moins un capteur (31) pour détecter au moins une propriété de l'aliment (L).

12. Appareil de cuisson PEF (1) selon l'une des revendications précédentes, dans lequel le tiroir (5 ; 20) comprend au moins un capteur (31) pour détecter des champs, des tensions et/ou des courants générés dans l'aliment pendant le traitement PEF.

13. Appareil de cuisson PEF (1) selon l'une des revendications précédentes, dans lequel le tiroir (5 ; 20) comporte au moins un actionneur pour le traitement nonélectrique de l'aliment (L).

14. Appareil de cuisson PEF (1) selon l'une des revendications précédentes, l'appareil de cuisson (1) étant un appareil ménager.

15. Système de cuisson PEF (1, A) comportant un appareil de cuisson PEF (1) selon l'une des revendications précédentes et au moins un récipient de stockage (A) inséré dans un tiroir (5 ; 20).
